# EUROPEAN PATENT APPLICATION

(11) **EP 1 026 577 A2**
(43) Date of publication of application: **09.08.2000**
(21) Application number: 00200390.3
(22) Date of filing: 07.02.2000
(51) Int. Cl.: G06F 3/12

(54) **Output management system**

(30) Priority: 08.02.1999 US 118981
(71) Applicant: Agfa Corporation, Ridgefield Park, NJ 07660-2199 (US)
(72) Inventor: Lucivero, Jeanne M., Burlington, MA 01803 (US); Smith, David, Londonderry, NH 03053 (US); White, Frank P., Woburn, MA 01801 (US); Catt, Jeremy C., North Andover, MA 01845 (US)
(74) Representative: Van Ostaeyen, Marc Albert Jozef

(57) **Abstract**

An output management method and apparatus for increasing the workflow productivity of an electronic prepress system is disclosed.

The present invention provides a nearly continuous output of raster data to a plurality of output devices, such as imagesetters, platesetters, on-press imagers, digital proofers, digital colour printers, and the like. A page or job to be printed is designed using a front end computer or workstation. One or more raster image processors (RIPs) are provided to efficiently produce raster data corresponding to the job. An output manager selectively co-ordinates the output of the raster data to a selected output device which records the raster data onto a supply of photosensitive, radiation sensitive, thermally sensitive, or other type of suitable recording media. The present invention maximises the production of the raster data by the raster image processors and the consumption of the raster data by the output devices.

## Description

### FIELD OF THE INVENTION

The present invention relates in general to electronic prepress systems. More particularly, the present invention is directed to an output management method and apparatus for increasing the workflow productivity of an electronic prepress system.

### BACKGROUND OF THE INVENTION

An electronic prepress system generally includes a front end computer or workstation for the design and layout of pages to be printed, one or more raster image processors (RIPs) for rasterising the page data, and at least one output device (e.g., imagesetter, platesetter, on-press imagers, digital proofer, digital colour printer, etc.) for recording the raster data provided by the RIPs onto a supply of photosensitive, radiation sensitive, thermally sensitive, or other type of suitable recording media (the raster data may also be sent to and/or stored in a file). To increase the workflow productivity of an electronic prepress system, therefore, it is important to maximise not only the production of the raster data by the raster image processors, but also the consumption of the raster data by the output devices.

### OBJECTS OF THE INVENTION

It is an object of the invention to provide an output management method and apparatus for increasing the workflow productivity of an electronic prepress system.

### SUMMARY OF THE INVENTION

The above mentioned objects are realised by a method having the specific features of claim 1 or claim 12. Specific features for preferred embodiments of the invention are set out in the dependent claims.

Generally, the present invention provides a method for outputting images, comprising the steps of:
providing a primary output device;
providing at least one alternate output device;
assigning at least one of the alternate output devices to the primary output device;
determining if any of the assigned alternate output devices are idle;
directing an image from an output queue of the primary output device to an idle one of the assigned alternate output devices; and
outputting the image on the idle assigned alternate output device.

The present invention also provides a method for outputting images, comprising the steps of:
providing a virtual output device that is not activated for output;
assigning at least one alternate output device to the virtual output device;
determining if any of the assigned alternate output devices are idle;
directing an image from an output queue of the virtual output device to an idle one of the assigned alternate output devices; and
outputting the image on the idle assigned alternate output device.

The present invention additionally provides a method for managing the output of imaging data, comprising the steps of:
providing a job list containing information corresponding to each job to be output by an output device, wherein the output device includes at least one supply of recording media having a type and size; and
providing a job output manager for selectively determining which jobs in the job list are to be output on the output device at a given time.

The present invention also provides a method for managing output in an imaging system, comprising the steps of:
preparing a job for output on a first output device in a first orientation;
determining if the first output device can be used to output the job;
if the first output device cannot be used, rotating the job to a second orientation and
redirecting the rotated job to an alternate output device; and
outputting the rotated job on the alternate output device in the second orientation.

The present invention also provides a method for managing output in an imaging system, comprising the steps of:
preparing a job for output on a first output device in a first orientation;
determining an amount of recording media that will be used by the first output device to output the job;
determining an amount of recording media that will be used by an alternate output device to output the job, if the job is rotated a predetermined amount to a second orientation;
if the alternate output device uses less recording media, automatically rotating the job the predetermined amount to the second orientation and redirecting the job to the alternate output device; and
outputting the rotated job on the alternate output device in the second orientation.

The present invention further provides a method, comprising the steps of:
defining a plurality of proof devices by assigning each proof device a name;
defining at least one media type to be associated with the name of a proof device, wherein each media type has physical attributes associated therewith;
providing at least one proof type on each proof device;
providing at least one proof resolution on each proof device;
providing a proof device list by displaying each possible proof device name and media type combination;
establishing proof options for a job by selecting a proof device name and media type combination, a proof type, and a proof resolution; and
outputting the job on the named proof device according to established proof options.

### SUMMARY OF THE INVENTION

The above mentioned objects are realised by a method having the specific features defined in claim 1. Specific features for preferred embodiments of the invention are set out in the dependent claims.

### BRIEF DESCRIPTION OF THE DRAWINGS

The features of the present invention will best be understood from a detailed description of the invention and a preferred embodiment thereof selected for the purposes of illustration and shown in the accompanying drawings in which:
Figure 1 illustrates a prepress system including the output management system (hereafter the "output manager") of the present invention;
Figure 2 is a flowchart illustrating the workflow through the prepress system of Figure 1;
Figure 3 illustrates an embodiment of the output manager of the present invention;
Figure 4 illustrates the output manager of the present invention running under the Windows NT operating system; and
Figures 5A and 5B provide a detailed illustration of the output manager of the present invention.

### DETAILED DESCRIPTION OF THE INVENTION

The features and advantages of the present invention are illustrated in detail in the accompanying drawings, wherein like reference numerals refer to like elements throughout the drawings. Although the drawings are intended to illustrate the present invention, the drawings are not necessarily drawn to scale.

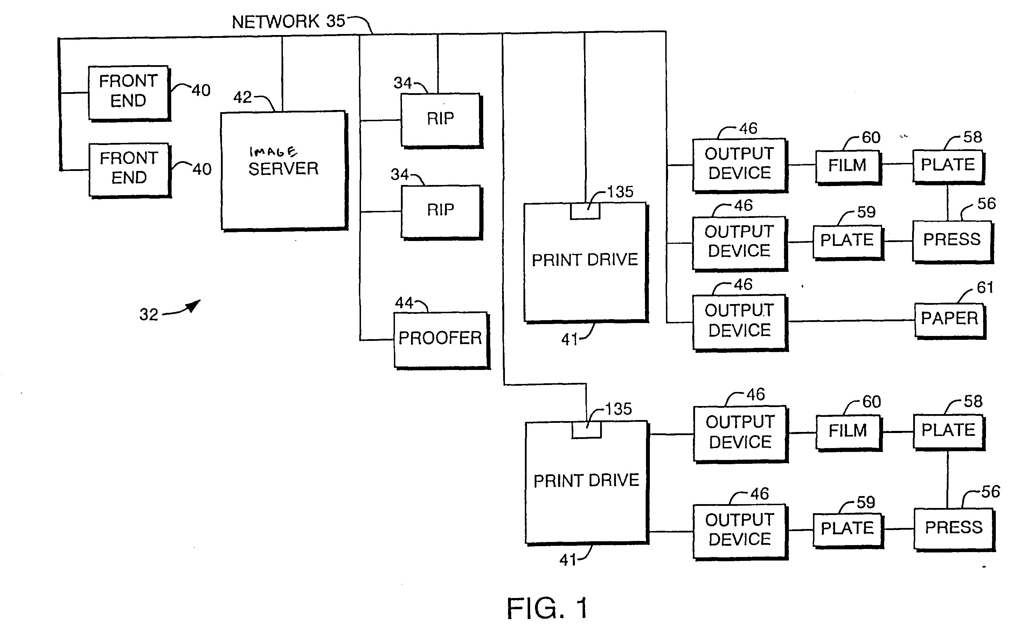

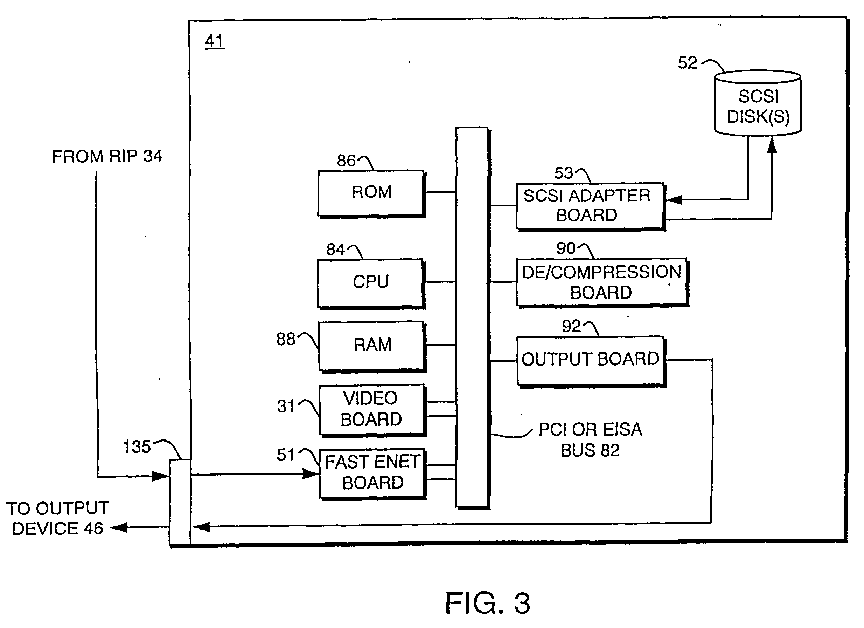

Referring to Figure 1, a prepress system 32 includes one or more computers that are referred to as front ends 40. The front ends 40 are connected to computer network 35. The front ends 40 are used for system configuration, as well as for creating, editing, or otherwise processing image data. Both colour and black and white images are prepared on the front ends 40 for processing by the prepress system 32 and eventual image reproduction by a printing press 56 using a printing plate 58. The front ends 40 are typically commercially available computers running on operating systems such as Windows NT, Mac OS, or UNIX or the like. The front ends 40 have imaging application software such as the commercially available Quark Express (from Quark, Inc.) and Adobe PageMaker (from Adobe Systems, Inc.), or any other similar software. The front ends 40 may also have imposition software used to lay out pages within an image, such as Preps, available from ScenicSoft of Lynnwood, Washington, or any other such impositioning software. Impositioning software positions one or more pages within an image, so that multiple pages are included in a single image. Having multiple pages imaged on a single plate increases productivity, because multiple pages are printed at the same time. The imaging application software and the imposition software both produce images coded in a page description language. The front ends 40 can output images coded in a page description language directly to one or more raster image processors 34 via the network 35. The front ends 40 can also provide images to one or more image servers 42, to a proofer 44, also referred to as a proof device, or to other types of output devices 46, via the network 35.

The network 35 can be any of the various types of commercially available computer networks, but must be of sufficient capacity to handle the traffic generated by the prepress system. In one embodiment, the network is a Fast Ethernet network, including a 100baseT Hub and appropriate connections between the networked components and the hub.

In one embodiment, an image server 42 receives and stores images from the front end 40. Image server 42 can queue jobs for immediate transmission to an available RIP 34. Image server 42 can also store images from the front end 40 for later processing by RIP 34. Image server 42 helps improve workflow efficiency by allowing front end users to output their jobs even if the RIPs 34 are busy. By queuing jobs for RIPs 34 on servers 42, the RIPs 34 can be kept continuously busy.

The RIPs 34 may be software RIPs operating on a computer system, which may be one of the front ends 40, or other computer systems.

The RIPs may be software RIPs such as the Agfa Viper software RIP and the Agfa Taipan software RIP, or hardware RIPs such as the AgfaStar hardware RIP, each of the above RIPs being commercially available from Agfa Corporation in Wilmington, MA. Each RIP 34 has a software and/or hardware RIP module for RIP functions such as screening, trapping, imposition, page or image combination, colour separation and colour management of image data.

The RIPs 34 each include a bi-directional network interface module 135 (see Figure 3) over which PDL files are received from front ends 40 or the image servers 42. Each RIP 34 thus appears on the network and can be accessed by any front end 40 or any image server 42 on the network 35. The network interface module 135 also serves as an output interface for communication of the RIP 34 through the network 35. In another embodiment, separate hardwired input and output connections are used between each RIP 34 and an associated output manager 41.

An output manager 41, also referred to as a PrintDrive, includes a plurality of software modules operating on a standard computer platform configured for efficient output manager functions.

Embodiments of an output manager are described in EP 0 882 580 , and EP 99 201 684 . The output manager hardware may also include a number of interface boards or modules including a fast network interface and hardware connection to an output device 46. Output manager 41 receives raster data from the RIPs 34 which it can either store or immediately send to an output device 46, depending upon instructions programmed by the operator. Output manager 41 may be connected to the RIPs 34 via the network 35, or may have individual connections to the RIPs. The output manager 41 may be directly connected to the output devices 46, as shown in the embodiment of Figure 1, or it may connect with the output devices 46 via network 35, or via other connections. The output devices 46 include imagesetters, platesetters, printers, plotters and other devices which accept and/or output raster data. The output device 46 may also comprise a file, folder, or other location for storage of the raster data.

An output device 46 can be an imagesetter that images onto photosensitive film 60 or paper 61. The photosensitive film 60 is used to make at least one plate 58. A plate 58 is used on press 56 to print one colour separation of an image. On a black and white image, only one colour, black, may be necessary. For a colour image, generally at least the three colours, cyan, magenta, and yellow, and often a fourth colour, black, are used. One or more "spot colour", which refers to an additional colour, may be used as well. The imagesetter images the raster data for each colour separation onto film, and the film is used to make a plate 58. The plates are then used on the press to print high quality printed material, often in large quantities. Examples of imagesetters are the Selectset Avantra® , the SelectSet® 7000, and the AccuSet® Plus imagesetters, all available from Agfa Corporation of Wilmington, Massachusetts.

An output device 46 can also be a direct-to-plate or computer-to-plate device such as a platesetter which images directly onto a plate 59, without the use of film 60. By use of a platesetter, the step of creating a plate 58 by using film 60 is eliminated, improving workflow and eliminating the costs involved in making a film. Examples of a platesetter is the Agfa Galileo platesetter, available from Agfa Corporation of Wilmington, Massachusetts.

As described above, imagesetters and platesetters generally image on sensitive media using a laser or other energy source. The imagesetter scans the laser across the media in what is referred to as the fast scan direction and moves the laser down the media in what is referred to as the slow scan direction after each scanline has been imaged. A bitmap image generated by a RIP 34 is a compilation of scanlines of data, with each scanline containing a line of pixels in the fast scan direction. Generally, the length of the image in the slow scan direction is the number of scanlines.

The RIP therefore generates bitmaps that are oriented such that the RIP or the output manager, when transmitting an image to the imagesetter, can first transmit the first fast scan scanlines of the image, thus allowing the imagesetter to begin imaging the first scanlines of data, even as later scanlines are still being transmitted.

A consequence of the RIP 34 generating images so that they can be transmitted in fast scan scanlines by the imagesetter is that an image generated for one imagesetter may be different than the same image generated with the same imaging parameters for a different imagesetter. Different imagesetters have different aspect ratios.

For example, the Agfa Galileo platesetter measures approximately 32.8˝ (833 mm) in the fast scan direction and 44˝ (1,118 mm) in the slow scan direction. The Agfa Avantra 44 measures approximately 44.5˝ (1,130 mm) in the fast scan direction and 36˝ (914 mm) in the slow scan direction. A 30˝x40˝ (1,130 mm) image that is processed by a RIP for output on a Galileo will be processed so that the longer edge will be imaged in the slow scan direction. If the RIP processed the same image for the Avantra 44, the image would be oriented such that the longer edge will be imaged in the fast scan direction. Thus, the same image that is processed for two different imagesetters can be oriented in different directions.

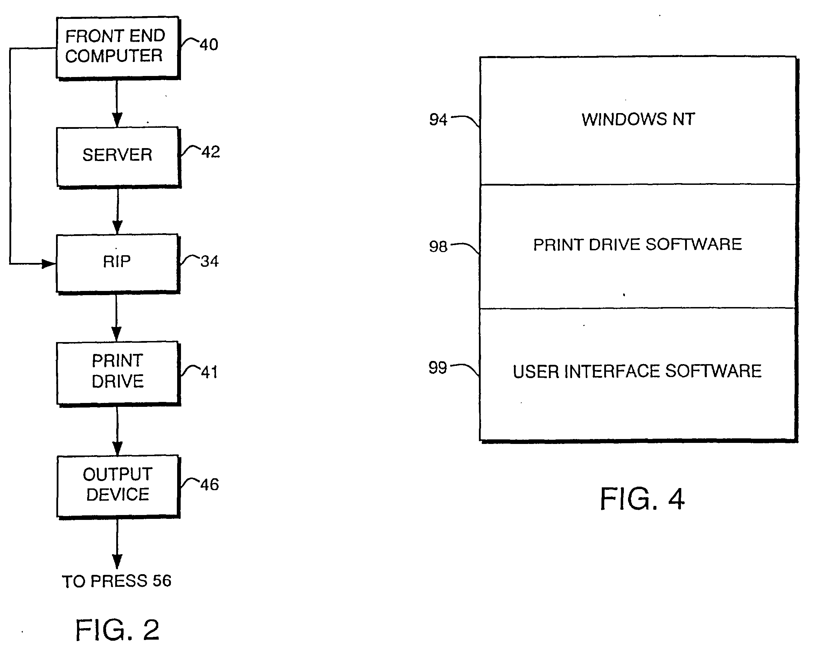

Referring to Figure 2, the workflow through the system of Figure 1 begins with the front end 40. The image is designed using an imaging application such as PageMaker™. An exemplary image includes both text and graphics, and the image may be impositioned on the front end 40, meaning that a number of pages are placed appropriately within a flat. The front end 40 may queue the image for processing by sending the job to the image server 42.

Alternatively, the front end 40 may output the job directly to a RIP 34. Use of an image server 42 provides the system operator with more constant utilisation of the front end 40 and the RIP 34 because neither the front end 40 nor the RIP 34 wait for the other. The image is transmitted to the RIP 34 by either the front end 40 or the image server 42. The image is then processed by the RIP 34. The RIP 34 outputs raster data to the output manager 41 which, in turn, stores the raster data until it is ready to be imaged onto an output device 46.

Note that numerous varied configurations of a prepress imaging system similar to that shown in Figure 1 can be utilised to implement the principles of the current invention. For instance, the system could include any combination of the following: one or more front end computers 40; one or more servers 42; one or more RIPs 34; one or more proofers 44; one or more output managers 41; and one or more output devices 46. Any number of printing presses 56 could be thereafter connect to the prepress imaging system.

The press 56 is included in the flowchart of Figure 2 for completeness of the image origination to printing process workflow, however, the press 56 is actually not part of the prepress imaging system. The primary function of the prepress system is to efficiently produce plates for use in the press 56. As is described below, information generated during the prepress workflow can be useful for the press printing.

Although the preferred embodiment calls for the output device 46 to be a print engine, the output device can be any destination device or application which accepts raster data, such as a hard drive for storage. A print engine output device 46 may render an image onto any known media such as paper, film or plate. Although frequently a RIP 34, output manager 41 and output device 46 will be locally situated; while the press 56, front end 40 and server 42 are remotely situated; the various components of the prepress imaging system can generally be either locally or remotely situated, subject to variables such as cable signal loss limitations, etc. Moreover, image data used throughout the prepress imaging system 32 can generally be stored in any component accessible over the network, i.e., the front end 40, the server 42 or the output manager 41.

Referring to Figure 3, one embodiment of an output manager 41 includes at least one CPU 84 connected to a multiple connection system such as a PCI or EISA bus 82. Other bus configurations are also suitable. In one embodiment CPU 84 is an Intel Pentium processor. Many other commercially available processors are also suitable. Output manager 41 also includes ROM 86, RAM 88 and a fast Ethernet board 51. Enough RAM 88 is necessary to support the operating system and to process the raster data sent and received by the output manager 41. A SCSI adapter board 53 is connected to the bus 82 and at least one SCSI storage device 52, e.g., a hard disk.

Output manager 41 includes a compression/decompression board 90 for compressing and decompressing files, as well as an engine interface or output board 92 for direct connection to an output device 46.

Alternately, software compression/decompression could be used. The network interface module or output manager interface terminal 135 is the hardware interface between the output manager 41 and the network 35.

Referring to Figure 4, in one embodiment the output manager 41 uses the Microsoft Windows NT operating system 94. The output manager software 98 runs in co-ordination with the operating system 94 to interface with the hardware components of the system. The output manager software operates as a set of Windows NT services, which are configured, started, and stopped by an NT service manager. User interface software 99 directs the activities of the output manager 41 using output manager software 98.

For example, the user interface software 99 allows the user to perform local set-up and configuration whereby the user configures the output manager 41 for an output device 46 to which it is connected. The user interface software 99 is also used to control the workflow and the raster data processing features. The user interface software 99 runs on the output manager 41 and is also capable of running on workstations such as front ends 40 or other computer systems connected either locally or remotely to the network 35. Remote users of the user interface software 99 have access to the same control features as users of the user interface software 99 running locally on an output manager 41.

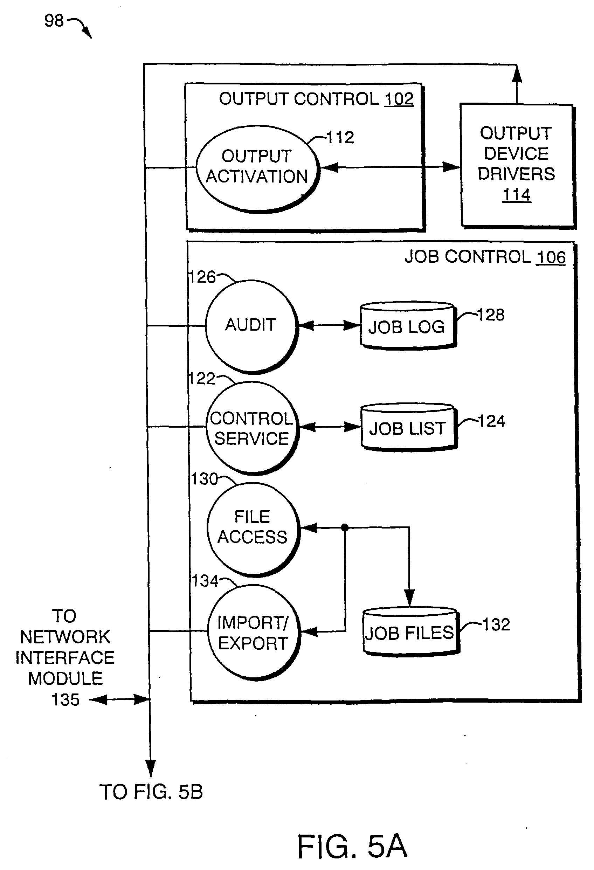

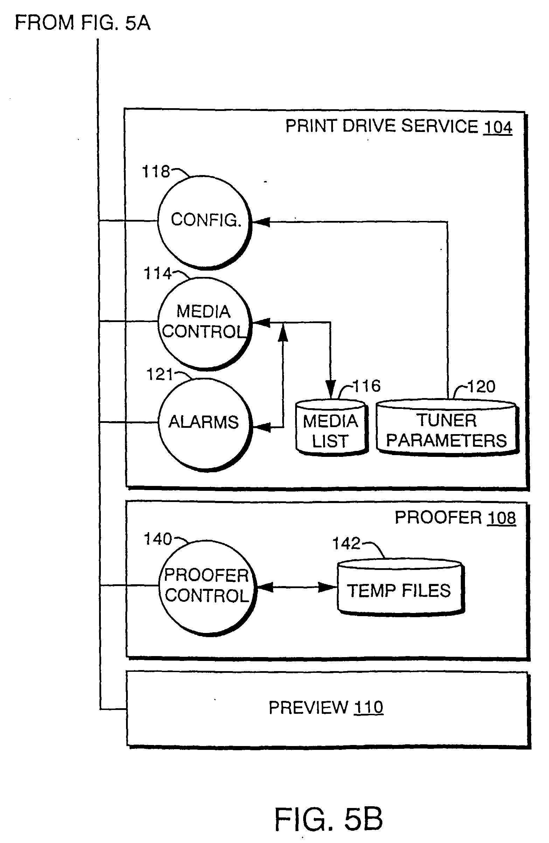

In more detail, and referring to Figures 5A and 5B, the output manager software 98 includes an output control system 102. The output control system 102 includes an output control interface subsystem or output activation system 112. The output control interface subsystem 112 communicates with output device drivers 114 to transmit raster data to an output device 46. The output control system 102 can reactivate the device drivers 114 in the case of error.

The output manager software 98 also includes an output manager service system 104 (Fig. 5B). The output manager service system 104 includes a media control subsystem 114. The media control system 114 provides an interface to the media list 116, which contains information about each type of media available to the output manager 41. Information about the media types supported on the installed output devices 46 are made available to a RIP 34 via this subsystem 114. Initial mapping of media types is done when an output device 46 is installed and may be changed at any time through the user interface software 99.

The output manager software 98 (Fig. 5A-B) includes a configuration subsystem 118. The configuration subsystem 118 works with the user interface software 99 to configure the output manager software 98.

In one embodiment, configuration parameters 120 are stored in the SOFTWARE section of the NT registry and the configuration subsystem 118 provides an interface to this data. Alarms subsection 121 provides alarms if errors are encountered. Alarms can sound on the output manager 41 or on computers 40 connected to the output manager 41 via the user interface software 99.

Job control system 106 (Fig. 5A) receives, stores, and initiates output of raster data. The job control service 122 provides access to the data and functions associated with a job list 124 which is a list of all raster data contained in the system 32. The raster data is organised by image and colour separations, so that the job list 124 holds the location information and status for all raster data associated with a job. All files for a job are written to a data storage area of the output manager 41 or in other accessible memory elsewhere in the system 32, such as in the front end 40 or the server 42. In one embodiment, each colour separation is stored in its own job file in TIFF format. All colour separations and their descriptive names are stored in the job list 124. These files are accessed through the job control service 122. File operations supported by the job control service 122 include addition of new jobs, deletion of job files, replacement of job files, and marking colour separations as "imageable" and "not imageable."

The job control service 122 also includes a job output manager. The job output manager determines how jobs on the job list are chosen for output to the currently connected print engine 46. The job output manager scans the job list 124 for all jobs that can be output at that time. The determination of which jobs to output is based upon how the job output manager is configured. For example, with regard to media, the job output manager can be configured to use the media type and size indicated by the RIP 34 when it sent the job, use the media type indicated by the RIP 34 but image on any size media (as long as it is large enough for the image), or to ignore the media type and size specified by the RIP 34. The job output manager can also be configured to conserve media, also referred to as media optimisation. The job output manager can be configured to always optimise using spindles when no media size is used, meaning that a choice of media will be made to use the smallest media possible for an image. Alternatively, the job output manager can be configured to use ganging on loaded media, meaning that jobs for the same media will be imaged immediately after each other, to reduce inter-image media waste. Ganging will give priority to images that can use the media that is already loaded on the machine. The job output manager can also be configured not to try to conserve media, or to use the media optimisation specified by a particular print job. The job output manager can also be configured for a number of jobs that can precede the next job in the list so that they can be imaged on the same media. When that limit is exceeded, a change media command is sent to the output device 46 so the next job in the list 124 can be run.

The job audit log subsystem 126 provides access to the job audit log 128. The job audit log 128 is used to record transactional job oriented events occurring on any part of the output manager system.

The job audit log 128 persists even after a job is deleted. The persistence time of the job audit log files 128 is configurable.

Job files are stored and accessed using the file access subsystem 130. In one embodiment, job raster data is stored in TIFF format, and the raster data for each colour separation is stored in a separate file in the jobs data store 132. All information regarding a job is stored either in the job list 124 or in the job files 132.

Typical job list information is that which relates to the job as a whole, such as priority, media type, and processing options.

Typical job file information includes when and where to print a job, how many copies to print, how many images per flat will be printed, etc. The job list and job file information is used by the job control service 122 to schedule a job for imaging.

The import/export subsystem 134 provides a mechanism for files to be imported and exported from or to other file systems connected to the network 35. This mechanism allows for the archiving of files in the job list 124. Files can be copied to any local or networked disk device. Import allows a new job to be created by importing the raster data, and creating, via the job control service 122, a directory in which to copy the job files. The job control service 122 adds the copied files to the job list 124.

The output manager software 98 can also include such other functionality as proofer system 108 (Fig. 5B), which includes proofer control 140 to convert raster data files for imaging on a proofer 44. Temporary proofer files are stored within a temporary store 142.

The preview system 110 provides access to the jobs in the job list 124 for user review on a computer monitor. Jobs are accessed via job control service 122. Raster data may be compressed using compression board 90. The resolution may also be reduced to match the resolution of a computer monitor, which is much less than the resolution of an output device 46 such as a print engine (e.g., imagesetter, platesetter). A preview image is generated from multiple colour separations, and is sent in screen resolution to a preview client application.

The output manager 41 receives raster data from the RIP 34 and outputs the raster data to output device 46, thereby providing work flow and efficiency benefits. In addition, the output manager 41 is capable of manipulating raster data in a way that was not previously possible. Specifically, the output manager can combine colour separations from the same or different images after the images have been processed by the raster image processor 34. This provides the user with the capability of modifying raster data after it has been processed by the RIP 34. For example, the output manager 41 includes operation as a digital image combiner, such as a digital doubleburner that combines two images onto the same plate. The output manager 41 also provides a masking operation as part of the digital image combiner for combining images to mask out part of an image, which is the electronic equivalent of deleting a section of imaged film.

The imagesetter (or other output device) and the proofer can be configured from a front end. This is accomplished through a user interface that is presented to the user when the user is ready to "print". Typically, this user interface only allows a user to select a final output device. However, the output manager functionality also allows the user to select a proofer. This association of a job with a proofer will remain with the job, unless modified later with the output manager user interface. This is particularly useful in a system with multiple proof devices, because a system operator can select which proof device and configuration will be used when a job is printed from an input source. Proofing options can be specified separately from imaging conditions.

The system operator can configure the output manager software by defining proof devices. When the system operator "prints" the job from a front end application, which in effect sends it to the RIP or to the image server, the user is able to select the proofer; the proof type, such as a colour composite proof, a grey-scale composite proof, an individual grey-scale proof; and the proof resolution.

The system will provide an error message if the proof device that is selected does not support the proof type or the proof resolution.

The system operator defines proof devices and gives each proof device a unique name, and output device type (i.e., model).

Examples of names and models are "mySherpa" and "yourSherpa," both of which could be AgfaJet Sherpa proof devices, and "myHP750," which is an HP DesignJet 750 model. Additionally, the system operator defines media types, each with a unique name. Media types have associated physical attributes. For example, "myPaper" could be defined to be 36˝ (914.4 mm) roll fed paper, 4 mil (0.1 mm) thick, and "36 matte finish' could be defined as 36˝ (914.4 mm) roll fed paper, 6 mil (0.15 mm) thick. Additionally the user can attach media types to each proofer device, as is relevant for their printing environment. For example "mySherpa" might be set up to use both "myPaper" and "36 matte finish," while "yourSherpa" might be set up to use "myPaper," and "my750" may use "36 matte finish."

User-defined elements of print options are built into a PPD file. PPD files contain relevant information for the output device connected to the RIP; a specific output device, or a specific output manager system. The print options included in the PPD file can include, but are not limited to, a target output engine and media type, output resolution, and proofing options.

The proofing options which may be selected are a proof engine, proof type, and proof resolution. The proof engine list, from which the system operator can choose using the user interface, consists of each proof device and media combination. For example "mySherpa@myPaper," "mySherpa@36 matte finish," "yourSherpa@myPaper," and "myHP750@36 matte finish." The proof type, as described above, can be such proof types as a colour composite proof, a grey-scale composite proof, and an individual grey-scale proof. The proof resolution lists the complete set of resolutions supported by the sum of the proof devices. For example, the AgfaJet Sherpa supports 360 and 720 dpi (14 and 28 dots per mm).

The HP DesignJet 750 supports 300 dpi (12 dots per mm). Therefore the list of proof resolutions for the above proofers would be 300, 360, and 720 dpi (12,14 and 28 dots per mm).

These printing options are incorporated into the PPD file. The system operator can select the specific proof options from the "Print Options" dialogue of the "Print" dialogue on the front end workstation. The selection of each option results in PostScript commands being sent to the RIP, which will configure the resulting job entry on the PrintDrive to associate these proofing parameters with the job.

In one embodiment, these Postscript commands are specific commands that utilise the capabilities of the Agfa PostScript Environment (PSE), which allows parameters to be set for a specific device.

Once the job is received on the output manager, a proof image will be automatically created based on the parameters configured in the proofing print options, and output to the specified proofing device.

The output manager also provides a user interface for modifying the proof options once the job has been received.

The system operator may associate with a job a job approval requirement. This is to impose a restriction such that a high resolution job does not output to the imagesetter or platesetter until it has been "approved". Possible job approval requirements include:
(1) the job does NOT require approval,
(2) the job DOES require approval, and
(3) the job requires approval only if it has a PROOF OPTION configured.

The job approval requirement may be set by the user through the PPD print options, as described above. The output manager also provides a user interface by which a user may display the job properties and check a dialogue job which indicates that the job has been approved.

In doing so, the user may enter a name indicating the party responsible for approving the job.

In one embodiment of the output manager, the output manager can be configured so the output device has alternate output devices associated with it. A first output device, referred to in this discussion as a primary output device, can have one or more alternates assigned to it. This assignment of alternates is used for sharing, or balancing imaging between two or more output devices. If an alternate output device is idle, the output manager checks the queue of the primary output device, and if there are images queued for output on the primary output device, the next image is output by the (otherwise idle) alternate device. When a prepress system includes two or more output devices of the same type, images formatted for the primary output device can be imaged on the alternate without any conversion. This feature allows a system operator to configure the system to make use of idle resources.

The output control and/or proofer control modules in the output manager control the processing of jobs. The output manager monitors the output queues to determine whether any jobs are waiting to be output. If the queue for an output device is empty, the output manager determines if the output device is an alternate for another output device, and if it is, that queue is checked for jobs. If a job is waiting for the primary output device, the job is instead output to the alternate.

The load balancing function is enabled by the system operator through a user interface. The user interface provides a set of screens for setting output device properties. The identification screen shows the device name, and the device type. The sharing screen includes a checkbox for enabling load balancing for that output device. The sharing screen also includes a selection of a primary output device for which this output device can be an alternate. If valid alternates are available, meaning that there are output devices of the same type that have the same media type, the enable load balancing checkbox is checked.

As an example, a system with two proofers of the same type can have a primary output device, called "mySherpa," which has been configured to be the target output device for print jobs. Although described using proofers, it should be readily apparent that the load balancing function of the present invention may be used with many types of output devices, including, e.g., imagesetters, platesetters, printers, and plotters, as well as other devices that accept and/or output raster data. A new proofer can be added that is called "newSherpa" and that is of the same type and uses the same media. The second proofer, newSherpa, can be used with a different workflow than mySherpa, that is to proof jobs from a particular front end or a particular RIP, or may be used to generate proof jobs on demand. A system operator can also configure the second proofer, newSherpa, to be an alternate for the primary output device, mySherpa. This is accomplished by installing the same media, for example "36 matte paper" in both proofers, and configuring each of the device properties in the output manager interface to be "36 matte paper." Load balancing is then enabled for the newSherpa, and newSherpa is set to be an alternate for mySherpa. This is valid because they are both the same type of output device, and share a common media type. The result is that the output device mySherpa will print jobs that have mySherpa set to be the target output device, and the output device newSherpa will print jobs that have newSherpa set as the target output device, and if no jobs are queued for newSherpa, newSherpa will print jobs that are set for mySherpa as the target output device.

A "virtual" output device can also be configured. A virtual output device is an output device that is configured in the output manager, but is not activated for output. The virtual output device is, however, specified as a target output device. One or more output devices that are the same type and have the same media type configuration as the virtual output device are configured to be alternates of the virtual output device. Since the alternate output devices do exist, and are enabled for output, all jobs on the virtual output device queue will be imaged by the alternates. In this way, the next image on the virtual output device queue is imaged on the next available of the one or more alternate output devices.

For example, in a system with two proofers, mySherpa and newSherpa, each is configured as a Sherpa proofer with 36 matte paper as media.

A third, virtual proofer is set up, called "vSherpa". vSherpa is configured as a Sherpa proofer with the same media as mySherpa and newSherpa, 36 matte paper. vSherpa output is not enabled, however.

The vSherpa proofer is configured to be a target of various jobs, for example by configuring it to be the default proofer. For each of the output devices mySherpa and newSherpa, load balancing is enabled, and each is configured to be an alternate for vSherpa. The proofers mySherpa and newSherpa would each first print jobs for which each output device is the target, and when no jobs are queued, will print jobs queued for vSherpa. In other words, when a job is queued for printing on the output device vSherpa, the next available alternate, mySherpa or newSherpa, will image the job. This will work in a similar manner for three or more output devices. Again, although described using proofers, it should be readily apparent that the virtual output device of the present invention may be used in systems comprising other types of output devices, including, e.g., imagesetters, platesetters, printers, and plotters, as well as other devices that accept and/or output raster data.

The output manager has the capability to rotate images in 90º increments. This capability can be useful to redirect jobs that were RIP processed for one output device type, such as the Agfa Galileo, to another output device type, such as the Agfa SelectSet Avantra 44. The rotation is performed on a high-resolution image as part of the output process. This rotation does not modify the orientation of the job as it is stored on the output manager. The output manager uses a hard disk for temporary storage while performing the image rotation. The location used for temporary storage space can be configured in the user interface.

In the output manager user interface, a system operator can specify a rotation to be applied to a job. The user interface will only allow a rotation to be selected if the job will fit on the currently selected device and media for that job. For example, a 30˝x40˝ (762 mm x 1016 mm) job will not be allowed to rotate such that the 40˝ (1016 mm) side would be printed on 30˝ (762 mm) media.

For very large high-resolution images, rotation in degrees other than 0º and 180º is very computation intensive, and may affect output times. It is quite possible that such a rotation will cause an output device to stop and wait for the output manager to send more scan lines if the output manager is unable to accomplish the rotation quickly enough to keep the output device continuously busy.

Thus, in some embodiments, this feature may not work with output devices that cannot stop and restart and so the image rotation function may not be helpful in everyday operation. It is often more efficient to create the image in the proper orientation for the output device, and not to rotate it on the output manager. However, in exceptional circumstances, it can be very useful to rotate the image. One example of such a circumstance is if a complex job that took 3 hours to process on the RIP for an Agfa SelectSet Avantra 44 is unable to print because the Avantra is out of order, and the only other available imagesetter is a Galileo. In that circumstance, it would be useful to have the output manager rotate and output the image to the Galileo instead of reprocessing the image on the RIP.

As computer systems running output manager software and hardware continue to improve, it will be increasingly possible to rotate larger images without incurring significant performance penalties.

Lower resolution proof images are less computationally intensive, and the output manager can be configured to automatically rotate a job being generated for output to a proofer by 90º if that rotation will minimise media usage. A ^{"}best fit" determination is made as to whether media would be saved by a rotation. The output manager determines from the dimensions of the image whether the image would use more or less media if the image was rotated. Generally, if the image can be oriented so that the longer side of the image can fit on the width of the media, that orientation will use the least media. The output manager automatically determines the orientation of least media usage, and rotates the image on output if that will conserve media. Although the rotation is generally performed when the proof job is generated, it is also possible to rotate a proof job which has already been generated, and is awaiting output.

A user interface is used to enable this capability. In the device properties screen for a proofer output device, the media configuration screen includes a checkbox to allow job rotation for best fit on media. If the device supports the feature, the proof jobs generated for this device automatically will be rotated by 90º to minimise media usage.

As 90 and 270 degree rotations are computation and time intensive, a method is employed to optimise job throughput times. To optimise job throughput times on jobs which require rotation, the rotation of the next plane is performed in parallel with the imaging of the current plane which has already been rotated. Overlapping the rotation of the next plane with the imaging of the current plane provides faster job throughput compared to rotating and subsequently outputting each plane in series. For devices that support prefetch of media, image rotation is performed during the prefetch phase.

Thus as the system is waiting for a prefetch media (e.g., a plate) to load, the image intended for that plate is rotated as desired.

The foregoing description of the present invention has been presented for purposes of illustration and description. It is not intended to be exhaustive or to limit the invention to the precise form disclosed, and many modifications and variations are possible in light of the above teaching.

## Claims

1. A method for outputting images, comprising the steps of:
- providing a primary output device;
- providing at least one alternate output device;
- assigning at least one of the alternate output devices to the primary output device;
- determining if any of the assigned alternate output devices are idle;
- directing an image from an output queue of the primary output device to an idle one of the assigned alternate output devices; and
- outputting the image on the idle assigned alternate output device.

2. The method of claim 1, wherein the directed image is the next image scheduled to be output by the primary output device.

3. The method of claim 1 or 2, further including the step of outputting another image in the output queue of the primary output device on the primary output device.

4. The method of claim 3, wherein images from the output queue of the primary output device are simultaneously output on the primary output device and the idle assigned alternate output device.

5. The method according to any one of the previous claims , further including the steps of:
- determining if an additional assigned alternate output devices is idle;
- if yes, directing another image from the output queue of the primary output device to the additional assigned alternate output device; and
- outputting the image on the additional assigned alternate output device.

6. The method of claim 5, further including the step of repeating the steps of claim 5 until none of the assigned alternate output devices are idle.

7. The method according to any one of the previous claims , further including the steps of:
- monitoring an output queue of each of the alternate output devices;
- if the output queue of any of the alternate output devices is empty, determining if that idle alternate output device is assigned to the primary output device;
- if yes, checking the queue of the primary output device for an image to be output; and
- if the queue of the primary output device contains an image, outputting the image on the idle alternate output device.

8. The method according to any one of the previous claims, wherein for each alternate output device, performing the steps of:
- providing a list of at least one primary output device for which the alternate output device is a valid alternate; and
- selecting at least one of the primary output devices in the list, wherein the alternate output device is an alternate for each of the selected primary output devices.

9. The method of claim 8, wherein a valid alternate output device is of the sane type and outputs on the same type of media as the primary output device.

10. The method according to any one of the previous claims , wherein the primary and alternate output devices comprise imaging devices for recording images onto a supply of recording media, or storage devices for storing the image data.

11. The method of claim 10, wherein the primary and assigned alternate output devices are compatible output devices and output on the sane type of recording media.

12. A method for managing the output of imaging data, comprising the steps of:
- providing a job list containing information corresponding to each job to be output by an output device, wherein the output device includes at least one supply of recording media having
- a type and size; and
- providing a job output manager for selectively determining which jobs in the job list are to be output on the output device at a given time.

13. The method of claim 12, wherein the job output manager is configured to output jobs from the job list that require a media type and size currently available on the output device.

14. The method of claim 12 or 13, wherein the job output manager is configured to output jobs from the job list that require a media type currently available on the output device.

15. The method of claim 14, wherein the job output manager outputs jobs from the job list that can be completely imaged on a media size currently available on the output device.

16. The method according to any one of claims 12 to 15, wherein the job output manager is configured to output jobs from the job list on the output device regardless of the media type and size currently available on the output device.

17. The method according to any one of claims 12 to 16, wherein the job output manager is configured to optimise consumption of the recording media by the output device.

18. The method of claim 17, wherein the job output manager optimises consumption of the recording media by grouping the jobs in the job list according to media type; and for a media type available on the output device, outputting each of the grouped jobs using the smallest size of the available media type on which the job can be completely imaged.

19. The method of claim 17, wherein the job output manager optimises consumption of the recording media by grouping the jobs in the job list according to media type; and for a media type available. On the output device, consecutively imaging each of the grouped jobs for the available media type.

20. The method according to any one of claims 12 to 19, further including the steps of:
- providing at least one alternate output device;
- assigning at least one of the alternate output devices to the output device;
- determining if any of the assigned alternate output devices are idle;
- directing a job from the job list of the output device to an idle one of the assigned alternate output devices; and
- outputting the job on the idle assigned alternate output device.

21. The method according to any one of claims 12 to 20, further including the step of automatically rotating a job in the job list that requires a media type and size not available on the output device to allow the job to be output on a media type and size currently available on the output device.
